# EUROPÄISCHE PATENTANMELDUNG

(11) **EP 4 721 547 A1**
(43) Veröffentlichungstag der Anmeldung: **08.04.2026**
(21) Anmeldenummer: 25183574.0
(22) Anmeldetag: 18.06.2025
(51) Int. Cl.: A01D 41/12

(54) **KORNTANKENTLEERVORRICHTUNG FÜR EINEN MÄHDRESCHER SOWIE MÄHDRESCHER**

(30) Priorität: 04.07.2024 DE 102024119027
(71) Anmelder: CLAAS Selbstfahrende Erntemaschinen GmbH, 33428 Harsewinkel (DE)
(72) Erfinder: Burbank, Martin, 48231 Warendorf (DE)
(74) Vertreter: CLAAS Gruppe

(57) **Zusammenfassung**

Die vorliegende Erfindung betrifft eine Korntankentleervorrichtung für einen Mähdrescher (1) mit einem Korntank (7), wobei die Korntankentleervorrichtung zumindest eine am Boden (8) des Korntanks (7) angeordnete Förderschnecke (9) aufweist, welche von zumindest einer Schneckenabdeckung (11) abschnittsweise abgedeckt ist, so dass zumindest eine Zulauföffnung (12) verbleibt, durch die Korn zur darunterliegenden Förderschnecke (9) gelangt, wobei die zumindest eine Zulauföffnung (12) durch zumindest eine ein gegenüber der Schneckenabdeckung (11) mittels eines Verstellmechanismus (15) relativbewegliches Abdeckblech (13) abdeckbar ist, wobei der Verstellmechanismus (15) zumindest einen Kniehebelmechanismus (16) umfasst, durch welchen das zumindest eine Abdeckblech (13) gegenüber der Schneckenabdeckung (11) stufenlos relativbeweglich ist, um die Öffnungsweite der zumindest einen Zulauföffnung (12) zu verändern.

## Beschreibung

Die vorliegende Erfindung betrifft eine Korntankentleervorrichtung für einen Mähdrescher gemäß dem Oberbergriff des Anspruches 1 sowie einen Mähdrescher mit einem Korntank gemäß Anspruch 13.

Eine Korntankentleervorrichtung für einen Mähdrescher der eingangs genannten Art ist aus der EP 2 883 438 A1 bekannt. Dort ist eine erste Schneckenabdeckung für zumindest eine am Boden des Korntanks angeordnete Förderschnecke offenbart, welche an einem zur Förderschnecke parallel verlaufenden Randabschnitt rechteckförmige Aussparungen aufweist, welche als gezahnte Zulauföffnungen für das im Korntank befindliche Korn ausgeführt sind. Eine zweite Schneckenabdeckung ist parallel zu der ersten Schneckenabdeckung und oberhalb dieser angeordnet. Die zweite Schneckenabdeckung weist ebenfalls an ihrem zur Förderschnecke parallel verlaufenden Randabschnitt rechteckförmige Aussparungen auf. Die zweite Schneckenabdeckung ist relativ zu der ersten Schneckenabdeckung durch einen Aktuator linear verschiebbar, so dass die Öffnungsweite der Zulauföffnungen durch eine teilweise oder vollständige Überlappung der rechteckförmigen Aussparungen einstellbar ist. Nachteilig an dieser Lösung ist, dass die Schneckenabdeckungen keine vollständige Unterbrechung der Erntegutzufuhr zu der darunter befindlichen Förderschnecke ermöglichen. Für das Längsverschieben der zweiten Schneckenabdeckung ist zu Beginn des Entleervorgangs eine große Kraft erforderlich, da das Gewicht des im Korntank enthaltenen Erntegutes auf dieser lastet. Des Weiteren beschränken die Zahnabschnitte zwischen den rechteckförmigen Aussparungen der Schneckenabdeckungen den Zulauf des Ernteguts zu der darunterliegenden Förderschnecke.

Ausgehend vom vorstehend genannten Stand der Technik liegt der Erfindung die Aufgabe zugrunde, eine Korntankentleervorrichtung für einen Mähdrescher bereitzustellen, welche sich durch eine verbesserte Einstellbarkeit der Öffnungsweite der Zulauföffnung auszeichnet.

Diese Aufgabe wird erfindungsgemäß durch eine Korntankentleervorrichtung mit den Merkmalen des Anspruches 1 gelöst. Weiterhin wird die Aufgabe durch einen Mähdrescher mit den Merkmalen des nebengeordneten Anspruches 13 gelöst. Vorteilhafte Weiterbildungen sind Gegenstand der abhängigen Ansprüche.

Gemäß dem Anspruch 1 wird eine Korntankentleervorrichtung für einen Mähdrescher mit einem Korntank vorgeschlagen, wobei die Korntankentleervorrichtung zumindest eine am Boden des Korntanks angeordnete Förderschnecke aufweist, welche von zumindest einer Schneckenabdeckung abschnittsweise abgedeckt ist, so dass zumindest eine Zulauföffnung verbleibt, durch die Korn zur darunterliegenden Förderschnecke gelangt, wobei die zumindest eine Zulauföffnung durch zumindest ein gegenüber der Schneckenabdeckung mittels eines Verstellmechanismus relativbewegliches Abdeckblech abdeckbar ist. Erfindungsgemäß ist vorgesehen, dass der Verstellmechanismus zumindest einen Kniehebelmechanismus umfasst, durch welchen das zumindest eine Abdeckblech gegenüber der Schneckenabdeckung stufenlos relativbeweglich ist, um die Öffnungsweite der zumindest einen Zulauföffnung zu verändern.

Wesentlich ist, dass die Öffnungsweite der zumindest einen einem durchgehenden Längsspalt entsprechenden Zulauföffnung durch eine von dem zumindest einen Kniehebelmechanismus bewirkte Relativbewegung des zumindest einen Abdeckbleches quer zur Längserstreckung der Schneckenabdeckung einstellbar ist. Dabei kann die Zulauföffnung durch das Abdeckblech vollständig freigegeben, so dass eine Entleerrate der Korntankentleervorrichtung 100 % beträgt, oder vollständig verschlossen sein. Die Entleerrate der Korntankentleervorrichtung kann durch das vollständige Verschließen der zumindest einen Zulauföffnung bis auf 0 % abgesenkt werden. Dazwischen liegende Entleerraten sind stufenlos einstellbar. Ein weiterer Vorteil des zumindest einen Kniehebelmechanismus besteht darin, dass die zur Verstellung des zumindest einen Abdeckbleches durch den Verstellmechanismus aufzubringende Kraft geringer ist als dies beim Stand der Technikgemäß EP 2 883 438 A1 der Fall ist, da dort das Eigengewicht des im Korntank enthaltenen Korns auf die in Querrichtung des Korntanks gegeneinander zu verschiebenden Schneckenabdeckungen einwirkt. Bei der durch den erfindungsgemäßen Verstellmechanismus erzeugten Relativbewegung des zumindest einen Abdeckbleches in Längsrichtung des Mähdreschers zur Verstellung wirkt die Gewichtskraft des im Korntank enthaltenen Korns auf eine kleinere Oberfläche.

Bevorzugt kann der zumindest eine Kniehebelmechanismus einen ersten Hebel und einen zweiten Hebel umfassen, wobei der erste Hebel mit einem Ende an einem ortsfesten Führungselement angelenkt ist und der zweite Hebel mit einem Ende an einem gegenüber dem Führungselement relativbeweglichen Verstellelement angelenkt ist, wobei beide Hebel mit ihrem anderen Ende in einem gemeinsamen Gelenkpunkt an dem Abdeckblech angelenkt sind. Durch eine translatorische Bewegung des Verstellelementes kann der laterale Abstand des zweiten Hebels zu dem ersten Hebel in Längsrichtung des Führungselementes verändert werden, was zu einer senkrecht hierzu orientierten Bewegung des Abdeckbleches führt.

Gemäß einer Weiterbildung kann der gemeinsame Gelenkpunkt an der dem Inneren des Korntanks abgewandten Unterseite des Abdeckbleches angeordnet sein. Hierdurch wird Verschmutzungen des Verstellmechanismus vorgebeugt. Das Abdeckblech weist eine im Wesentlichen glatte Oberfläche auf, welche zu einem optimierten Gutfluss beiträgt.

Weiter bevorzugt können der erste und der zweite Hebel durch Drehgelenke an dem Führungselement, dem Verstellelement und dem Abdeckblech angelenkt sein.

Insbesondere kann der Verstellmechanismus zumindest einen Aktuator umfassen, der als Linearaktuator ausgeführt ist. Bevorzugt kann der Aktuator als Hydraulikzylinder ausgeführt sein. Der Aktuator kann mit einem Ende an einer Wandung des Korntanks befestigt und mit seinem anderen Ende an dem Verstellelement angeordnet sein. Mittels des zumindest einen Aktuators ist das Verstellelement gegenüber dem Führungselement relativbeweglich.

Bevorzugt kann das Führungselement achsparallel zur Förderschnecke angeordnet sein und das an dem Führungselement geführte Verstellelement ist parallel zu diesem angeordnet. Eine lineare Verstellbewegung des Verstellelementes relativ zum Führungselement führt zu einer Lage- bzw. Abstandsänderung des ersten und zweiten Hebels des Kniehebelmechanismus, wodurch das Abdeckblech parallel zur Schneckenabdeckung stufenlos ein- und ausgefahren werden kann.

Des Weiteren kann das Verstellelement zur Führung zwei zueinander beabstandete Längsschlitze aufweisen, durch welche sich jeweils ein an dem Führungselement angeordneter Bolzen mit einem den Längsschlitz überlappenden Kopfabschnitt erstreckt.

Durch die Längsschlitze wird die Bewegung des Verstellelementes in axialer Richtung geführt und ein ungewolltes Verkanten vermieden.

Dabei kann der an dem Führungselement angelenkte erste Hebel mit seinem einem Ende an dem Kopfabschnitt eines der Bolzen angelenkt sein. Dies ist davon abhängig, auf welcher Seite des Verstellelementes der erste Hebel an dem Führungselement angelenkt ist. So kann die Anlenkung des ersten Hebels an dem Kopfabschnitt dann vorgesehen sein, wenn dieser auf der dem zumindest einen Aktuator zugewandten Seite des Verstellelementes positioniert ist.

Bevorzugt kann das Abdeckblech in einer die Zulauföffnung vollständig freigebenden Position vollständig unterhalb der Schneckenabdeckung positioniert sein. Dies hat den Vorteil, dass das Abdeckblech nicht durch das Gewicht des im Korntank befindlichen Korns belastet wird. Des Weiteren kommt es dadurch bei vollständiger Freigabe der Zulauföffnung zu keiner Störung des Gutflusses durch eine in die Zulauföffnung hineinragende Kontur des Abdeckbleches.

Insbesondere kann der Verstellmechanismus unterhalb der Schneckenabdeckung angeordnet sein. Dadurch wird das Auftreten von Verschmutzungen, welche die Funktion des Verstellmechanismus beeinträchtigen können, minimiert.

Gemäß einer bevorzugten Ausführungsform kann die zumindest eine Förderschnecke durch zwei parallel zueinander angeordnete Schneckenabdeckungen abschnittsweise abgedeckt sein, so dass zwei einander gegenüberliegende Zulauföffnungen verbleiben, die jeweils durch ein mittels des Verstellmechanismus relativbewegliches Abdeckblech abdeckbar sind. Die beiden Abdeckbleche weisen jeweils zumindest eine Kniehebelanordnung zur synchronen Verstellung der Abdeckbleche auf, die vorzugsweise durch einen gemeinsamen Aktuator des Verstellmechanismus betätigbar sind.

Gemäß einer bevorzugten Weiterbildung kann die Korntankentleervorrichtung eine Steuereinheit zur Ansteuerung des Verstellmechanismus in Abhängigkeit von einer Füllstandmenge im Korntank, einer verfügbaren Antriebsleistung zum Antreiben der Korntankentleervorrichtung und/oder von der Art des Erntegutes umfassen.

So lässt sich eine Entleerrate durch die Ansteuerung des Verstellmechanismus variabel einstellen, indem durch die Positionierung des Abdeckbleches relativ zu der Schneckenabdeckung die Öffnungsweite der Zulauföffnung im Bereich zwischen 0% und 100% verändert werden kann. Dies kann insbesondere bei einer Restbefüllung eines Überladefahrzeugs vorteilhaft sein.

Ein weiterer Aspekt ist die Ansteuerung in Abhängigkeit von der verfügbaren Antriebsleistung für die Korntankentleervorrichtung, welche in Abhängigkeit von der Durchführung des Entladevorgangs im Stillstand des Mähdreschers oder im laufenden Erntebetrieb unterschiedlich ist.

Ebenso kann das Auftreten von Schlupf im Antriebsstrang der Korntankentleervorrichtung berücksichtigt werden, damit es nicht aufgrund einer zu hohen Entleerrate zu einer Überlastung kommt.

Eine Ansteuerung des Verstellmechanismus in Abhängigkeit von der Art des Erntegut ermöglicht es zudem, für Reis oder dergleichen eine andere, insbesondere geringere, Entleerrate einzustellen als für Getreide, ohne hierfür einen Austausch der zumindest einen Förderschnecke gegen eine Förderschnecke mit geringerer Steigung vornehmen zu müssen.

Die eingangs gestellte Aufgabe wird weiterhin durch einen Mähdrescher mit den Merkmalen des nebengeordneten Anspruches 13 gelöst.

Gemäß dem Anspruch 13 wird ein Mähdrescher mit einem Korntank vorgeschlagen, wobei der Mähdrescher mit einer Korntankentleervorrichtung nach einem der Ansprüche 1 bis 12 ausgeführt ist. Auf die Ausführungen zur erfindungsmäßen Korntankentleervorrichtung darf verwiesen werden.

Bevorzugt kann die Steuereinheit der Korntankentleervorrichtung dazu eingerichtet sein, den Verstellmechanismus in Abhängigkeit von einem Betriebszustand des Mähdreschers und/oder der Erntegutart anzusteuern.

Somit kann bei einem Betriebszustand, in welchem die Durchführung des Entladevorgangs im Stillstand des Mähdreschers oder im laufenden Erntebetrieb erfolgt, die verfügbare Antriebsleistung für die Korntankentleervorrichtung unterschiedlich sein. Dem kann durch die Anpassung der Entleerrate durch die Veränderung der Öffnungsweite der Zulauföffnung Rechnung getragen werden. Dies kann manuell durch eine Eingabe eines Bedieners vorgegeben werden oder automatisch durch die Steuereinheit, indem diese beispielsweise ein den laufenden Erntebetrieb charakterisierendes Eingangssignal, wie die Fahrgeschwindigkeit, auswertet.

Ebenso lässt sich durch die Ansteuerung des Verstellmechanismus eine Überlastung des Antriebsstranges vermeiden, indem bei einem Auftraten von Schlupf die Öffnungsweite der Zulauföffnung automatisch reduziert wird.

Einen weiteren Betriebszustand bildet das Einschalten der Korntankentleervorrichtung zum Entleeren des Korntanks. Während des Erntevorgangs ist die Zulauföffnung in der Regel verschlossen. Die Steuereinheit kann den Verstellmechanismus zeitlich versetzt ansteuern, um die Zulauföffnung freizugeben, nachdem eine Vertikalfördervorrichtung und eine in einem Auslaufrohr angeordnete Förderschnecke, die mit der Vertikalfördervorrichtung trieblich verbunden ist, eingeschaltet wurden.

Eine Ansteuerung in Abhängigkeit von der Erntegutart berücksichtigt die für die jeweilige Erntegutart zulässige maximale Entleerrate. So kann von der Korntankentleervorrichtung beim Ernten von Getreide mit einer höheren Entleerrate gefördert werden als bei einem Reis-oder Graseinsatz.

Die vorliegende Erfindung wird nachstehend anhand eines in den Zeichnungen dargestellten Ausführungsbeispieles näher erläutert.

Es zeigen:
- Fig. 1: schematisch und exemplarisch eine Seitenansicht eines Mähdreschers;
- Fig. 2: schematisch und exemplarisch eine perspektivische Ansicht auf am Boden eines Korntanks des Mähdreschers angeordnete Förderschnecken;
- Fig. 3: schematisch und exemplarisch eine Ansicht in den Korntank des Mähdreschers;
- Fig. 4: eine perspektivische Ansicht eines Verstellmechanismus einer der am Boden angeordneten Förderschnecken gemäß Fig. 2 mit freigegebenen Zulauföffnungen; und
- Fig. 5: eine perspektivische Ansicht des Verstellmechanismus gemäß Fig. 3 mit geschlossenen Zulauföffnungen.

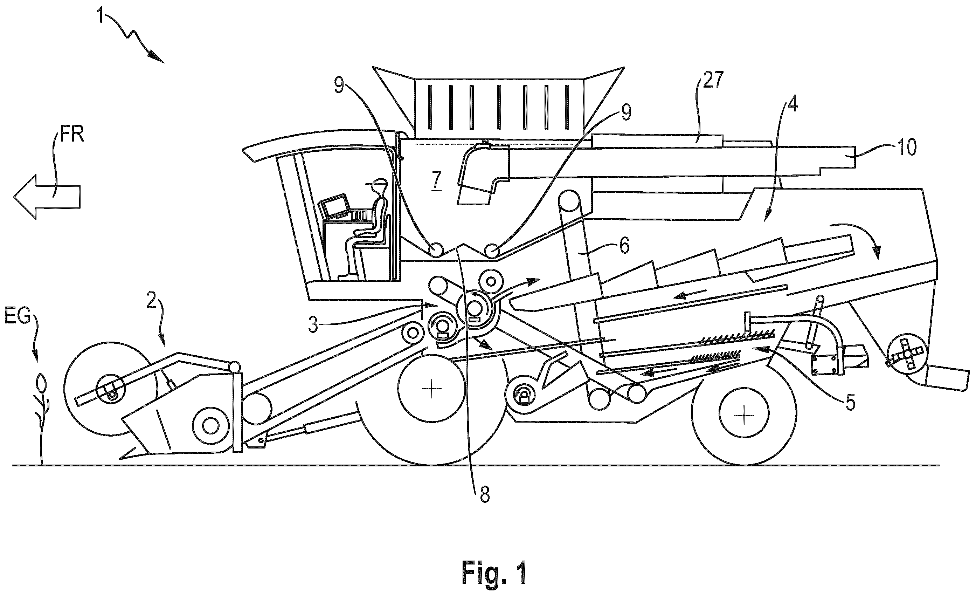

In Fig. 1 ist schematisch und exemplarisch eine Seitenansicht eines Mähdreschers 1 dargestellt. Der Mähdrescher 1 umfasst ein Vorsatzgerät 2, welches zum Abtrennen und Aufnehmen von Erntegut EG eingerichtet ist. Das vom Vorsatzgerät 2 aufgenommene Erntegut EG gelangt durch einen Einzugkanal zu einer Dreschvorrichtung 3, welche im Erntegut EG enthaltene Kornbestandteile ausdrischt und abscheidet. Von der Dreschvorrichtung 3 nicht abgeschiedene Nichtkornbestandteile des Erntegutes gelangen zu einer Abscheidevorrichtung 4, um darin noch enthaltene Kornbestandteile weiter abzuscheiden. Die von der Dreschvorrichtung 3 und der Abscheidevorrichtung 4 abgeschiedenen Kornbestandteile gelangen zu einer Reinigungsvorrichtung 5, welche verbliebene Nichtkornbestandteile, wie Spelzen, Kurzstroh und dergleichen, vom Korn trennt. Das gereinigte Korn gelangt durch eine Fördervorrichtung 6, einen sogenannten Kornelevator, in einen Korntank 7. Der Korntank 7 ist abschnittsweise trichterförmig ausgebildet. Der Korntank 7 weist eine Korntankentleervorrichtung auf, um das darin enthaltene Korn auf ein Transportfahrzeug zu überladen.

Die Korntankentleervorrichtung umfasst zumindest eine am Boden 8 des Korntanks 7 angeordnete Förderschnecke 9. Hier und vorzugsweise sind zwei Förderschnecken 9 am Boden 8 des Korntanks 6 angeordnet. Die Förderschnecken 9 erstrecken sich quer zur Fahrtrichtung FR des Mähdreschers 1. Die Anordnung der zumindest einen Förderschnecke 9 erfolgt am tiefsten Punkt im Korntank 7, um eine vollständige Entleerung zu erreichen. Die Korntankentleervorrichtung umfasst eine nicht dargestellte Vertikalfördervorrichtung, welche von den Förderschnecken 9 zugeführtes Korn in vertikaler Richtung einem mit der Vertikalfördervorrichtung verbundenen Auslaufrohr 10 zuführt. Das Auslaufrohr 10 ist um eine vertikale Achse schwenkbar am Mähdrescher 1 angeordnet. Im Inneren des Auslaufrohres 10 ist eine weitere Förderschnecke angeordnet, welche mit der Vertikalfördervorrichtung trieblich verbunden ist.

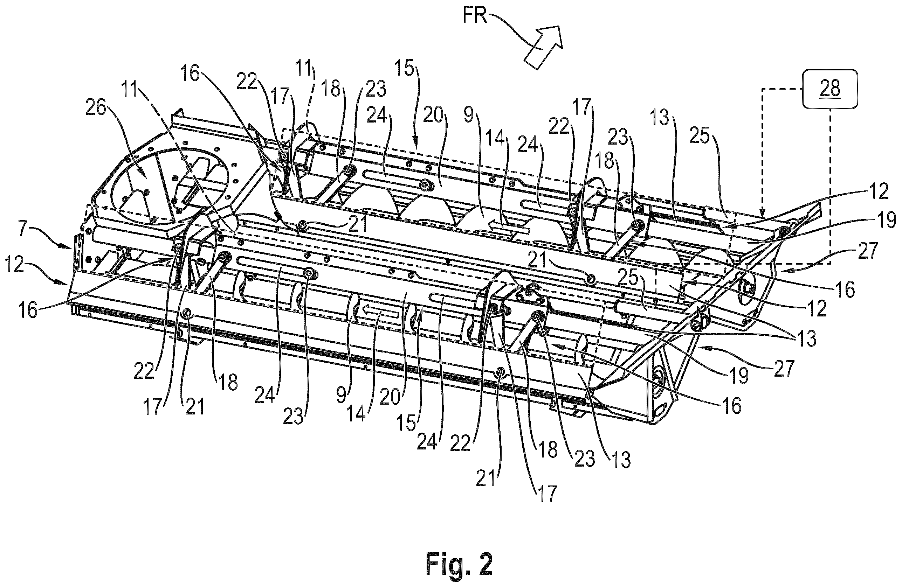

Die Darstellung in Fig. 2 zeigt schematisch und exemplarisch eine perspektivische Ansicht auf die zumindest eine am Boden 8 des Korntanks 7 angeordnete Förderschnecken 9, hier und vorzugsweise zwei Förderschnecken 9. Die Förderschnecken 9 sind in auf dem Boden 8 angeordneten oder in diesen integrierten Schneckentrögen 27 angeordnet. Die Schneckentröge 27 umschließen die Förderschnecken 9 untenseitig, d.h. dem Boden 8 zugewandt, abschnittsweise in Umfangsrichtung. Obenseitig sind die Förderschnecken 9 durch jeweils zwei zueinander parallel verlaufend angeordnete Schneckenabdeckungen 11 abschnittsweise abgedeckt. Die Schneckenabdeckungen 11 sind strichliniert angedeutet.

Durch die nur abschnittsweise Abdeckung der jeweiligen Förderschnecke 9 durch die zumindest eine Schneckenabdeckung 11 verbleibt zumindest eine Zulauföffnung 12, welche durch zumindest ein Abdeckblech 13 abdeckbar ist. Hier und vorzugsweise sind jeweils zwei Schneckenabdeckungen 11 für jede Förderschnecke 9 vorgesehen, so dass sich zu beiden Seiten der Förderschnecken 9 jeweils zwei Zulauföffnungen 12 ausbilden, die durch jeweils ein Abdeckblech 13 abdeckbar sind. In dem in Fig. 2 gezeigten Ausführungsbeispiel ist die zumindest eine Zulauföffnung 12 der jeweiligen Förderschnecke 9 vollständig durch das jeweilige Abdeckbleche 13 verschlossen dargestellt.

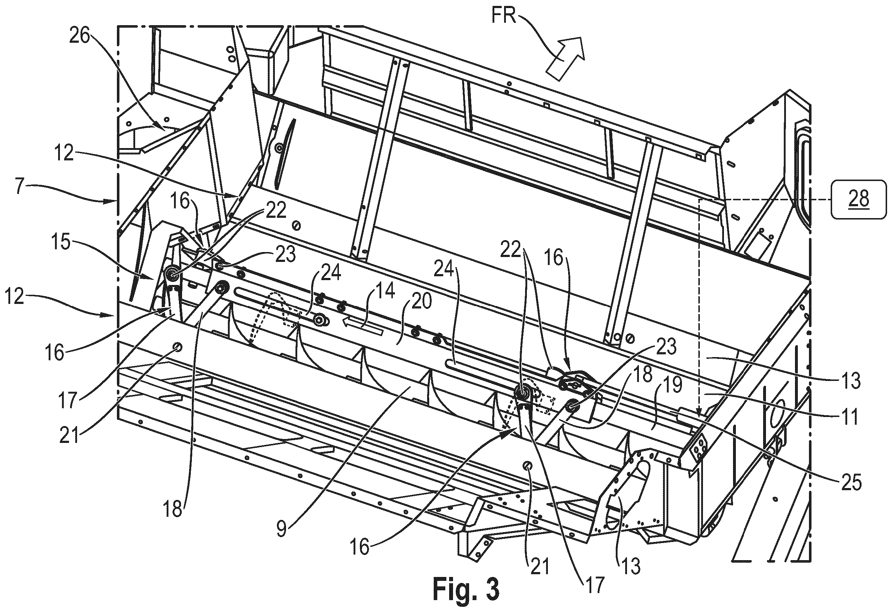

Die Darstellung in Fig. 3 zeigt schematisch und exemplarisch eine Ansicht in den Korntank 7 des Mähdreschers 1. Die Förderschnecken 9 sind obenseitig jeweils durch die zumindest eine Schneckenabdeckung 11 abschnittsweise abgedeckt. In Fig. 3 ist die in Fahrtrichtung FR gesehen vordere Förderschnecke 9 durch die zumindest eine Schneckenabdeckung 11 abschnittsweise abgedeckt dargestellt, während die in Fahrtrichtung FR gesehen hintere Förderschnecke 9 ohne die zugehörige zumindest eine Schneckenabdeckung 11 dargestellt ist.

Die Schneckenabdeckungen 11 erstecken sich parallel zu den Förderschnecken 9 und decken diese in ihrer Längsrichtung respektive Förderrichtung 14 vollständig ab. Die jeweilige quer zur Förderrichtung 14 verlaufende verbleibende Zulauföffnung 12 ist durch die Abdeckbleche 13 abdeckbar, wobei der Grad der Abdeckung der Zulauföffnungen 12 durch das jeweilige gegenüber der Schneckenabdeckung 11 mittels jeweils eines Verstellmechanismus 15 relativbewegliche Abdeckblech 13 verändert werden kann. Jeder Förderschnecke 9 ist ein Verstellmechanismus 15 zugeordnet. Die Anordnung der Abdeckbleche 13 ist bezüglich der jeweiligen Förderschnecke 9 spiegelbildlich.

Die nachfolgende Beschreibung des Verstellmechanismus 15 gilt für beide Förderschnecken 9, deren Zulauföffnungen 12 durch die Abdeckbleche 13 in unterschiedlichem Maß abdeckbar sind.

Das Abdeckblech 13 ist in Fahrtrichtung FR gesehen in eine unterhalb der Schneckenabdeckung 11 befindliche Position überführbar. Bei der Positionierung des Abdeckbleches 13 durch den Verstellmechanismus 15 vollständig unterhalb der Schneckenabdeckung 11 ist die Zulauföffnung 12 vollständig freigeben.

Der Verstellmechanismus 15 des jeweiligen Abdeckbleches 13 umfasst zumindest einen Kniehebelmechanismus 16, durch welche das jeweilige Abdeckblech 13 gegenüber der jeweiligen Schneckenabdeckung 11 stufenlos relativbeweglich ist, um die Öffnungsweite der Zulauföffnungen 12 zu verändern. In dem in Fig. 2 bis 5 dargestellten Ausführungsbeispiel sind jeweils zwei Kniehebelmechanismen 16 vorgesehen, um die Position des jeweiligen Abdeckbleches 13 relativ zu der jeweiligen Schneckenabdeckung 11 zu verstellen.

Der zumindest eine Kniehebelmechanismus 16 umfasst einen ersten Hebel 17 und einen zweiten Hebel 18. Der erste Hebel 17 ist mit einem Ende an einem ortsfesten Führungselement 19 angelenkt. Der zweite Hebel 18 mit einem Ende an einem gegenüber dem Führungselement 19 relativbeweglichen Verstellelement 20 angelenkt. Der erste Hebel 17 ist im Drehpunkt 22 an dem Führungselement 19 angelenkt und der zweite Hebel 18 ist im Drehpunkt 23 an dem Verstellelement 20 angelenkt.

Der erste Hebel 17 und der zweite Hebel 18 sind mit ihrem anderen Ende in einem gemeinsamen Gelenkpunkt 21 an dem Abdeckblech 13 angelenkt.

Das Führungselement 19 ist achsparallel zur Förderschnecke 9 angeordnet. Das Verstellelement 20 ist parallel zum Führungselement 19 angeordnet und an diesem geführt.

Bevorzugt ist das Führungselement 19 hohlzylindrisch ausgeführt und weist einen runden oder polygonen Querschnitt auf.

Jeder Verstellmechanismus 15 weist nur ein Führungselement 19 auf um die Kniehebelmechanismen 16 der spiegelbildlich angeordneten Abdeckbleche 13 zu führen.

Das Verstellelement 20 weist zur Führung zwei zueinander beabstandete Längsschlitze 24 auf, durch welche sich jeweils ein an dem Führungselement 19 angeordneter Bolzen mit einem pilzförmigen Kopfabschnitt erstreckt. Einer der Bolzen mit dem pilzförmigen Kopfabschnitt, der sich durch den Längsschlitz 24 erstreckt, bildet zugleich an dem Führungselement 19 den Drehpunkt 22 des ersten Hebels 17 aus.

Der zweite Hebel 18 des Kniehebelmechanismus 16 ist im äußeren Endbereich in einem Drehpunkt 23 an dem Verstellelement 20 angelenkt.

Zur Betätigung umfasst der Verstellmechanismus 15 zumindest einen Aktuator 25. Der zumindest eine Aktuator 25 ist als Linearaktuator ausgeführt. Bevorzugt kann der Aktuator 25 als Hydraulikzylinder, insbesondere doppeltwirkender Hydraulikzylinder, ausgeführt sein. Der Aktuator 25 ist mit einem Ende an einer Wandung des Korntanks 7 befestigt und mit seinem anderen Ende an dem Verstellelement 20.

Vorzugsweise weist jeder Verstellmechanismus 15 nur einen Aktuator 25 auf, um die spiegelbildlich angeordneten Abdeckbleche 13 mittels der Kniehebelmechanismen 16 stufenlos zu verstellen. Die Bewegung der Abdeckbleche 13 mittels der Kniehebelmechanismen 16 erfolgt dabei synchron.

Auf der in Fahrtrichtung FR gesehen linken Seite des Korntanks 7 ist eine Öffnung 26 angedeutet, durch welche das von der Fördervorrichtung 14 geförderte Korn an das Auslaufrohr 10 übergeben wird.

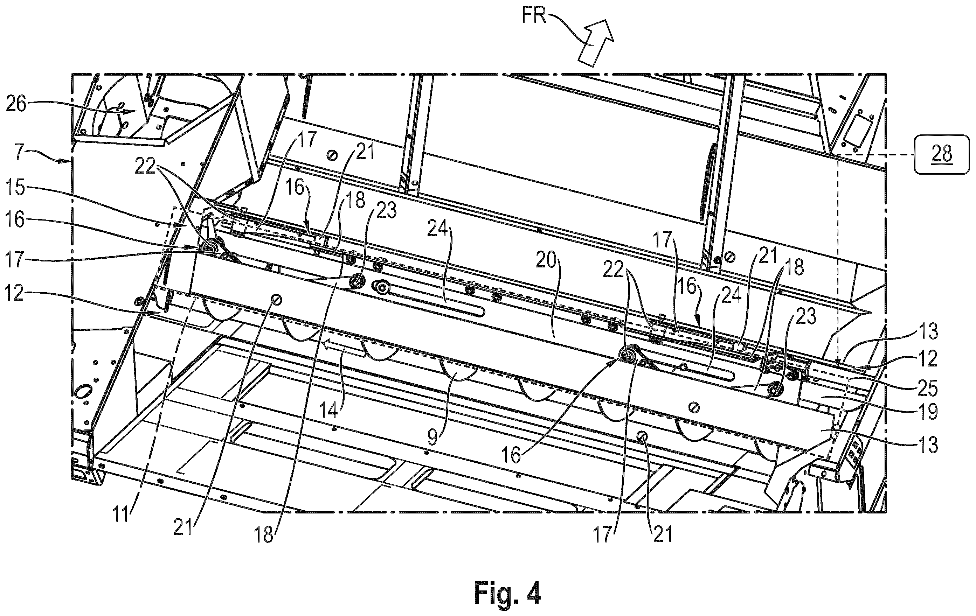

In Fig. 4 ist schematisch und exemplarisch eine perspektivische Ansicht des Verstellmechanismus 15 einer der am Boden 8 im Korntank 7 angeordneten Förderschnecken 9 gemäß Fig. 2 mit durch die Abdeckbleche 13 freigegebenen Zulauföffnungen 12 dargestellt. Die spiegelbildlich zu beiden Seiten der Förderschnecke 9 angeordneten Abdeckbleche 13 sind in der die Zulauföffnungen 12 vollständig freigebenden Position dargestellt. In dieser die Zulauföffnungen 12 vollständig freigebenden Position befindet sich das in der Fig. 4 sichtbare Abdeckblech 13 vollständig unterhalb der strichliniert angedeuteten Schneckenabdeckung 11. Der Drehpunkt 22 des ersten Hebels 17 und der Drehpunkt 23 des zweiten Hebels 18 weisen in dieser Position der Abdeckbleche 13 ihren größtmöglichen axialen Abstand zueinander auf. Der axiale Abstand der Drehpunkte 22, 23 zueinander wird hier und vorzugsweise durch die Länge der Längsschlitze 24 im Verstellelement 20 bestimmt, welche den Verstellweg begrenzen können.

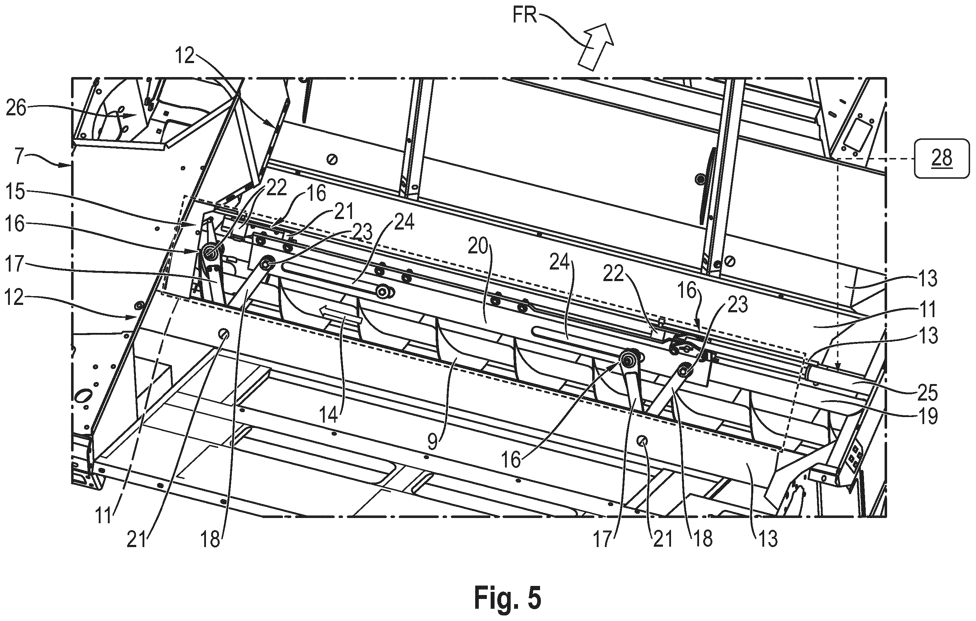

Fig. 5 zeigt schematisch und exemplarisch eine perspektivische Ansicht des Verstellmechanismus 15 gemäß Fig. 2 mit geschlossenen Zulauföffnungen 12. In dieser vollständig ausgefahrenen Position der Abdeckbleche 13 erstreckt sich das in der Fig. 5 sichtbare Abdeckblech 13 vollständig über den Rand der strichliniert angedeuteten Schneckenabdeckung 11 hinaus und verschießt die Zulauföffnung 12. Der Drehpunkt 22 des ersten Hebels 17 und der Drehpunkt 23 des zweiten Hebels 18 weisen ihren geringsten axialen Abstand zueinander auf, der ebenfalls durch die Länge der Längsschlitze 24 im Verstellelement 20 bestimmt werden kann.

Die Kombination aus dem vorzugsweise nur einen Aktuator 25 und den Kniehebelmechanismen 16 zur Verstellung der beiden Abdeckbleche 13 der jeweiligen Förderschnecke 9 ermöglicht es, die Abdeckbleche 13 in eine beliebige Zwischenposition relativ zu den Schneckenabdeckungen 11 zu bewegen. So lässt sich eine Entleerrate durch die Ansteuerung des Verstellmechanismus 15 variabel einstellen, indem durch die Positionierung des jeweiligen Abdeckbleches 13 relativ zu der Schneckenabdeckung 11 die Öffnungsweite der jeweiligen Zulauföffnung 12 im Bereich zwischen 0% und 100% eingestellt werden kann.

Zur Ansteuerung des Verstellmechanismus 15 kann eine Steuereinheit 28 vorgesehen sein. Die Steuereinheit 28 kann die Aktuatoren 25 voneinander unabhängig ansteuern. Somit kann die Öffnungsweite der Zulauföffnungen 12 der beiden Förderschnecken 9 voneinander unabhängig verändert werden. Die Steuereinheit 28 der Korntankentleervorrichtung ist dazu eingerichtet, den Verstellmechanismus 15 in Abhängigkeit vom Betriebszustand des Mähdreschers 1 anzusteuern.

### Bezugszeichenliste

- 1: Mähdrescher
- 2: Vorsatzgerät
- 3: Dreschvorrichtung
- 4: Abscheidevorrichtung
- 5: Reinigungsvorrichtung
- 6: Fördervorrichtung
- 7: Korntank
- 8: Boden
- 9: Förderschnecke
- 10: Auslaufrohr
- 11: Schneckenabdeckung
- 12: Zulauföffnung
- 13: Abdeckblech
- 14: Förderrichtung
- 15: Verstellmechanismus
- 16: Kniehebelmechanismus
- 17: Erster Hebel
- 18: Zweiter Hebel
- 19: Führungselement
- 20: Verstellelement
- 21: Gelenkpunkt
- 22: Drehpunkt
- 23: Drehpunkt
- 24: Längsschlitz
- 25: Aktuator
- 26: Öffnung
- 27: Schneckentrog
- 28: Steuereinheit

- FR: Fahrtrichtung

## Patentansprüche

1. Korntankentleervorrichtung für einen Mähdrescher (1) mit einem Korntank (7), wobei die Korntankentleervorrichtung zumindest eine am Boden (8) des Korntanks (7) angeordnete Förderschnecke (9) aufweist, welche von zumindest einer Schneckenabdeckung (11) abschnittsweise abgedeckt ist, so dass zumindest eine Zulauföffnung (12) verbleibt, durch die Korn zur darunterliegenden Förderschnecke (9) gelangt, wobei die zumindest eine Zulauföffnung (12) durch zumindest eine ein gegenüber der Schneckenabdeckung (11) mittels eines Verstellmechanismus (15) relativbewegliches Abdeckblech (13) abdeckbar ist, **dadurch gekennzeichnet, dass** der Verstellmechanismus (15) zumindest einen Kniehebelmechanismus (16) umfasst, durch welchen das zumindest eine Abdeckblech (13) gegenüber der Schneckenabdeckung (11) stufenlos relativbeweglich ist, um die Öffnungsweite der zumindest einen Zulauföffnung (12) zu verändern.

2. Korntankentleervorrichtung nach Anspruch 1, **dadurch gekennzeichnet, dass** der zumindest eine Kniehebelmechanismus (16) einen ersten Hebel (17) und einen zweiten Hebel (18) umfasst, wobei der erste Hebel (17) mit einem Ende an einem ortsfesten Führungselement (19) angelenkt ist und der zweite Hebel (18) mit einem Ende an einem gegenüber dem Führungselement (19) relativbeweglichen Verstellelement (20) angelenkt ist, wobei beide Hebel (17, 18) mit ihrem anderen Ende in einem gemeinsamen Gelenkpunkt (21) an dem Abdeckblech (13) angelenkt sind.

3. Korntankentleervorrichtung nach Anspruch 2, **dadurch gekennzeichnet, dass** der gemeinsamen Gelenkpunkt (21) an der dem Inneren des Korntanks (7) abgewandten Unterseite des Abdeckbleches (13) angeordnet ist.

4. Korntankentleervorrichtung nach Anspruch 2 oder 3, **dadurch gekennzeichnet, dass** die Hebel (17, 18) durch Drehgelenke (22, 23) angelenkt sind.

5. Korntankentleervorrichtung nach Anspruch 1 bis 4, **dadurch gekennzeichnet, dass** der Verstellmechanismus (15) zumindest einen Aktuator (25) umfasst, der als Linearaktuator ausgeführt ist.

6. Korntankentleervorrichtung nach Anspruch 2 bis 5, **dadurch gekennzeichnet, dass** das Führungselement (19) achsparallel zur Förderschnecke (9) angeordnet ist und das an dem Führungselement (19) geführte Verstellelement (20) parallel zu diesem.

7. Korntankentleervorrichtung nach Anspruch 6, **dadurch gekennzeichnet, dass** das Verstellelement (20) zur Führung zwei zueinander beabstandete Längsschlitze (24) aufweist, durch welche sich jeweils ein an dem Führungselement (19) angeordneter Bolzen mit einem den Längsschlitz (24) überlappenden Kopfabschnitt erstreckt.

8. Korntankentleervorrichtung nach Anspruch 7, **dadurch gekennzeichnet, dass** der an dem Führungselement (19) angelenkte erste Hebel (17) mit seinem Ende an dem Kopfabschnitt eines der Bolzen angelenkt ist.

9. Korntankentleervorrichtung nach einem der vorangehenden Ansprüche, **dadurch gekennzeichnet, dass** das Abdeckblech (13) in einer die Zulauföffnung (12) vollständig freigebenden Position vollständig unterhalb der Schneckenabdeckung (13) positioniert ist.

10. Korntankentleervorrichtung nach einem der vorangehenden Ansprüche, **dadurch gekennzeichnet, dass** der Verstellmechanismus (16) unterhalb der Schneckenabdeckung (11) angeordnet ist.

11. Korntankentleervorrichtung nach einem der vorangehenden Ansprüche, **dadurch gekennzeichnet, dass** die zumindest eine Förderschnecke (9) durch zwei parallel zueinander angeordnete Schneckenabdeckungen (11) abschnittsweise abgedeckt ist, so dass zwei einander gegenüberliegende Zulauföffnungen (12) verbleiben, die jeweils durch ein mittels des Verstellmechanismus (15) relativbewegliches Abdeckblech (13) abdeckbar sind.

12. Korntankentleervorrichtung nach einem der vorangehenden Ansprüche, **dadurch gekennzeichnet, dass** die Korntankentleervorrichtung eine Steuereinheit (28) zur Ansteuerung des Verstellmechanismus (15) in Abhängigkeit von einer Füllstandmenge im Korntank (7), einer verfügbaren Antriebsleistung zum Antreiben der Korntankentleervorrichtung und/oder von der Art des Erntegutes umfasst.

13. Mähdrescher (1) mit einem Korntank, **dadurch gekennzeichnet, dass** der Mähdrescher (1) mit einer Korntankentleervorrichtung nach einem der Ansprüche 1 bis 12 ausgeführt ist.

14. Mähdrescher (1) nach Anspruch 13, **dadurch gekennzeichnet, dass** die Steuereinheit (28) der Korntankentleervorrichtung dazu eingerichtet ist, den Verstellmechanismus (15) in Abhängigkeit vom Betriebszustand des Mähdreschers (1) anzusteuern.
